**Europäisches Patentamt**

**European Patent Office**

**Office européen des brevets**

(11) Veröffentlichungsnummer: **0 126 233**
A1

(12) # EUROPÄISCHE PATENTANMELDUNG

(21) Anmeldenummer: **84102887.1**

(22) Anmeldetag: **16.03.84**

(51) Int. Cl.³: **F 16 J 15/12**

(30) Priorität: **20.04.83 DE 3314237**

(43) Veröffentlichungstag der Anmeldung: **28.11.84**
**Patentblatt 84/48**

(84) Benannte Vertragsstaaten: **DE FR GB IT SE**

(71) Anmelder: **GOETZE AG,**
**Bürgermeister-Schmidt-Strasse 17,**
**D-5093 Burscheid 1 (DE)**

(72) Erfinder: **Lachnit, Detlev, Dipl.-Ing., Jakobistrasse 2,**
**D-5090 Leverkusen 3 (DE)**

(54) **Zylinderkopfdichtung.**

(57) Bei Zylinderkopfdichtungen bestehen die im wesentlichen der Dichtpressungserhöhung dienenden Verstärkungen (2) im Bereich der Einfassungen (9) aus unterhalb der Einfassungen ein- oder beidseitig angeordneten polymeren Auflagen (7) aus bevorzugt einem mechanisch und temperaturbeständigen Kunstharz. Die Auflagen (7) sind bevorzugt im Bereich zwischen den Brennraumöffnungen und unterhalb der Einfassungsbereiche angeordnet, die am weitesten von den Befestigungsschraubenöffnungen (6) liegen. Die Auflagen (7) können eine unterschiedliche Dicke besitzen, und sie können gegebenenfalls nur zum Teil von den Einfassungsschenkeln abgedeckt sein, so daß die unabgedeckten Auflagen eine Verlängerung der Einfassungsschenkel und eine Abdeckung gegenüber einfließende Imprägniermittel bilden.

- 1 -

## Zylinderkopfdichtung.

Die Erfindung betrifft eine Zylinderkopfdichtung für Verbrennungskraftmaschinen, vorzugsweise aus einer gegebenenfalls metallisch verstärkten Weichstoffplatte mit einer Einfassung an mindestens einer der Durchgangsöffnungen, vorzugsweise an der Brennraumöffnung, und einer im wesentlichen der Dichtpressungserhöhung dienenden Verstärkung im Bereich der Einfassungen.

Bei Zylinderkopfdichtungen für Verbrennungskraftmaschinen aus vor allem gegebenenfalls metallisch verstärkten und imprägnierten Weichstoffplatten sind vor allem die Brennraumöffnungen mit im Querschnitt etwa C- bis U-förmig über den Dichtrand gebogenen metallischen Einfassungen versehen. Je nach Einsatzfall der Dichtung ist es dabaei erforderlich, an bestimmten Zonen der Einfassungen die Dichtpressung zu erhöhen, indem man vorzugsweise unter die Einfassungen Metallbleche legt. So sind beispielsweise bei Zylinderkopfdichtungen für Reihenmotoren die Bereiche zwischen den Brennraumöffnungen meistens den höchsten Belastungen ausgesetzt, und die auf die ringförmigen Einfassungen wirkenden Schraubenkraftlinien sind abhängig vom Abstand der Einfassungsbereiche von den Befestigungsschrauben, so daß metallische Unterlegbleche eingesetzt werden.

Diese Maßnahmen sind zwar wirkungsvoll, ihr Herstellungsprozeß erfordert jedoch aufwendige Werkzeuge und vielfach

- 2 -

ist ihre exakte Montage zusammen mit den Einfassungen relativ schwierig. Darüberhinaus können Unterlegbleche nur in definierten Blechstärken eingesetzt werden, und eine gegebenenfalls von Ort zu Ort erforderliche Dichtpressungserhöhung ist auf diese Weise nicht möglich.

Bei Zylinderkopfdichtungen ist es außerdem üblich, zur lokalen Erhöhung der Dichtpressung auf definierte Zonen der Dichtflächen Auflagen aus vorzugsweise Elastomeren vorzugsweise im Siebdruckverfahren aufzutragen. Diese Auflagen können ringförmig die Durchgangsöffnungen umgeben oder aber auch im Restflächenbereich angeordnet sein. Derartige Auflagen sind jedoch völlig ungeeignet zur Pressungserhöhung an den Einfassungen des Brennraumbereiches.

Nach der DE-PS 2.713.542 hat man schon eine ringförmige Auflage auf die Einfassungsschenkel und den angrenzenden Weichstoff aufgetragen, um zu verhindern, daß beim Tauchimprägnieren der fertig eingefaßten Zylinderkopfdichtung Imprägniermittel in den Weichstoff unterhalb der Einfassungen gelangt. Auflagen, die die Einfassungsschenkel und den angrenzenden Weichstoff überdecken, konnten dagegen nicht beim Tauchimprägnieren das unerwünschte Einfließen von Imprägniermittel in den Bereich unterhalb der Einfassungen in vollem Umfang verhindern.

Der vorliegenden Erfindung liegt daher die Aufgabe zugrunde, Zylinderkopfdichtungen der Dichtpressungserhöhung dienenden Maßnahmen an den Einfassungen zu schaffen, die

0126233

- 3 -

gegebenenfalls zugleich beim Imprägnieren das Einfließen von Imprägniermittel in den Bereich unterhalb der Einfassungen verhindern. Das Verfahren ihrer Herstellung soll dabei möglichst einfach und kostensparend sein.

Erfindungsgemäß wird diese Aufgabe durch Auflagen aus polymerem Material gelöst, die in den gewünschten Bereichen unterhalb der Einfassungen vor deren Montage ein- oder beidseitig aufgetragen sind. Die Auflagen bestehen dabei bevorzugt aus einem mechanischen und temperaturbeständigen Material. wie einem Epoxidharz, das im Siebdruckverfahren aufgetragen, getrocknet und anschließend unter gegebenenfalls Verwendung von Klebstoffen mit der Dichtungsplatte verbunden ist. Zur Verstärkung der Einfassungen in den von den Befestigungsschrauben entfernter liegenden Bereichen haben die von den Einfassungen umhüllten ein- oder beidseitigen Auflagen die Form von etwa Ringsegmenten. Zur Anpassung der auf die Einfassungen entsprechend ihrem Abstand von den Befestigungsschrauben wirkenden unterschiedlichen Dichtpressungskräfte können die Auflagen, wie an und für sich aus der DE-PS 2.054.804 bekannt, eine sichelförmige Kontur mit einer an die Dichtpressung angepaßten unterschiedlichen Dicke besitzen.

Zur Verhinderung des Einfließens von Imprägniermittel in den Weichstoff unterhalb der Einfassungen ist es auch möglich, die Auflagen ein- oder beidseitig so anzuordnen, daß sie anschließend nur zum Teil von Einfassungen abgedeckt werden. Derartige Auflagen können entweder ringförmig die gesamte Einfassung umgeben oder sie können nur

- 4 -

nur partiell in besonders beanspruchten Zonen eingesetzt werden. Beim anschließenden Imprägnieren durch Tauchen wirken dann die über die Einfassungen ragenden Auflagenbereiche als Abdeckung gegenüber in den Weichstoff unterhalb der Einfassung einfließendes Imprägniermittel. Die Auflagen verbreitern zugleich die Zone der erhöhten Dichtpressung am Dichtungsrand.

Durch den erfindungsgemäßen Einsatz von polymeren Auflagen als Unterlagen unter die Einfassungen anstelle der bisher verwendeten metallischen Unterlegbleche ist es dem Fachmann möglich, auf einfache Weise auf den jeweiligen Anwendungsfall abgestimmt, die Dichtpressungen an den Einfassungen gezielt zu erhöhen. Die erfinderischen Maßnahmen sind zugleich einfach zu realisieren und bieten eine Möglichkeit, das Einfließen von Imprägniermittel in den Bereich unterhalb der Einfassungen beim Imprägnieren zu verhindern.

Die Erfindung wird anhand der sechs Abbildungen näher erläutert. Und zwar zeigt:

Figur 1 die Aufsicht auf eine Zylinderkopfdichtung nach dem Aufbringen der Auflagen, aber vor der Montage der Einfassungen

Figur 2 ein Querschnittsbild durch die Zylinderkopfdichtung der Figur 1 in der Linie II-II'

Figur 3 ein weiteres Querschnittsbild durch die Zylinderkopfdichtung der Figur 1 in der Linie III-III'

- 5 -

Figur 4  ein weiteres Querschnittsbild im Bereich
der Einfassung einer weiteren Zylinderkopfdichtung
gemäß der Erfindung

Figur 5  die Aufsicht auf eine Zylinderkopfdichtung
im Brennraumbereich gemäß eines weiteren Ausführungsbeispieles

Figur 6  die Aufsicht auf eine Zylinderkopfdichtung
im Brennraumbereich gemäß eines weiteren Ausführungsbeispieles.

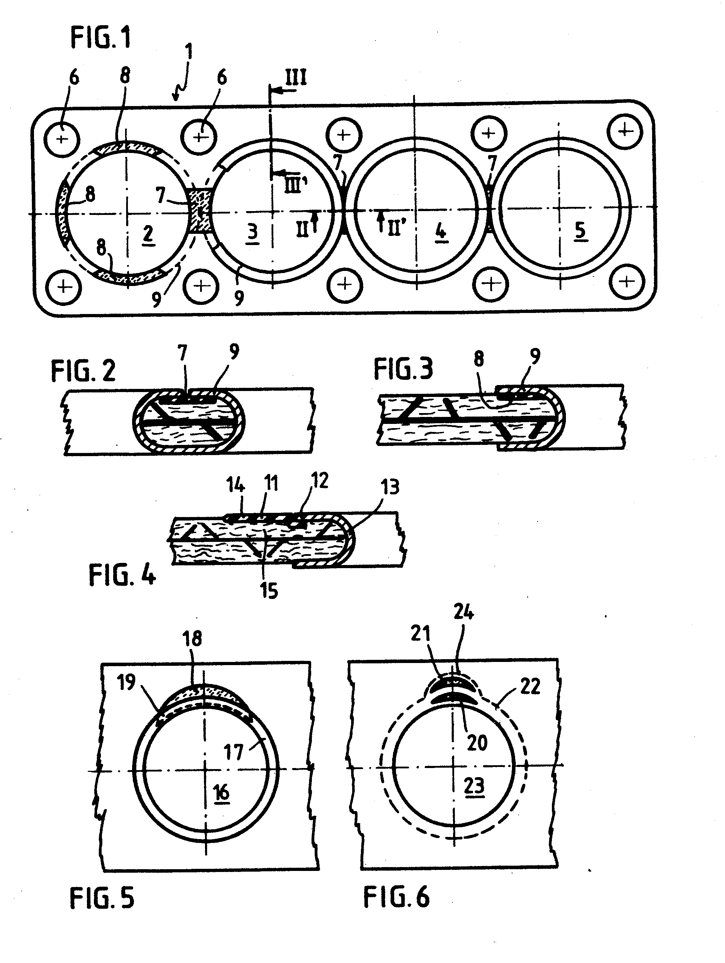

In Figur 1 ist 1 die Zylinderkopfdichtung mit den vier
Brennraumöffnungen 2,3,4,5 und den insgesamt zehn Durchgangsöffnungen 6 für die Befestigungsschrauben. Die Auflagen 7 verstärken die Dichtpressung im Bereich zwischen
den Brennraumöffnungen 2,3, 3,4 und 4,5, und die Auflagen
8 verstärken die Dichtpressung der Einfassung in den am
weitesten von den Befestigungsschraubenöffnungen 6 liegenden Bereichen. Die gestrichelten Linien deuten die
Lage der anschließend über die Auflagen 7,8 gebogenen
Einfas- sungen 9 an.

Das Querschnittsbild der Figur 2 zeigt einen Schnitt
durch die Zylinderkopfdichtung der Figur 1 in der Linie
II-II' nach dem Einfassen der Dichtung. Die einseitige
Auflage 7 ist von der Einfassung 9 umgeben.

Das Querschnittsbild der Figur 3 zeigt einen Schnitt
durch die Zylinderkopfdichtung der Figur 1 in der Linie
III-III'. Die einseitige Auflage 8 ist von der U-förmig
über den Dichtrand gebogenen metallischen Einfassung 9

- 6 -

überdeckt.

Im Querschnittsbild der Figur 4 ist 11 die Auflage aus polymerem Material, die nur im Bereich der Schenkelenden von der Einfassung 13 abgedeckt ist, während sie im Bereich 14 eine unabgedeckte Weichstoffauflage bildet, die beim Imprägnieren das Einfließen von Imprägniermittel in den Bereich 15 unterhalb der Einfassung 13 verhindert, und die zugleich die Schenkel 12 der Einfassung 13 verlängert.

Im Aufsichtsbild der Figur 5 ist 16 eine Brennraumöffnung mit einer metallischen Einfassung 17. Die Auflage 18 bildet eine lappenartige Erweiterung der metallischen Einfassungsschenkel 17. Sie ist im gestrichelt gezeichneten Bereich 19 von der Einfassung 17 überdeckt.

Das Aufsichtsbild der Figur 6 zeigt die Anordnung der Auflagen 20,21 unterhalb der Einfassungen 22 der Brennraumöffnung 22, bei denen die lappenartige Erweiterung 24 der Einfassung 22 die Auflage einer in den Zylinderkopf eingebauten Vorverbrennungskammer bildet.

- 1 -

Patentansprüche:

1. Zylinderkopfdichtung für Verbrennungskraftmaschinen, vorzugsweise aus einer gegebenenfalls metallisch verstärkten und imprägnierten Zylinderkopfdichtung mit einer vorzugsweise metallischen Einfassung mindestens einer der Durchgangsöffnungen, vorzugsweise der Brennraumöffnung, und einer im wesentlichen der Dichtpressungserhöhung dienenden Verstärkung im Bereich der Einfassungen, dadurch gekennzeichnet, daß in definierten Bereichen unterhalb der Einfassungen (9,13,22,17) ein- oder beidseitig Auflagen (7,8,11,20,21) aus polymerem Material vorgesehen sind.

2. Zylinderkopfdichtung nach Anspruch 1, dadurch gekennzeichnet, daß die Auflagen (7,8,11,20,21,13) aus einer auf die Dichtung aufgetragenen, mechanisch und temperaturbeständigen Kunstharzmasse bestehen, die nach dem Trocknen unter gegebenenfalls Verwendung von Haftmitteln mit der Dichtungsplatte (1) fest verbunden sind.

3. Zylinderkopfdichtung nach Anspruch 1 und/oder 2, dadurch gekennzeichnet, daß die Auflagen 7 im Bereich zwischen den Durchgangsöffnungen (2,3,4,5) der Verbrennungsräume aufgetragen sind.

4. Zylinderkopfdichtung nach mindestens einem der An-

sprüche 1 bis 3, dadurch gekennzeichnet, daß die Auflagen (8) die Form von Ringsegmenten besitzen und in den Bereichen unterhalb der Einfassungen (8) mit der größten Entfernung zu den Befestigungsschrauben (6) angeordnet sind.

5. Zylinderkopfdichtung nach mindestens einem der Ansprüche 1 bis 4, dadurch gekennzeichnet, daß die Auflagen (7,8,11,20,21,18) eine unterschiedliche Dicke besitzen.

6. Zylinderkopfdichtung nach mindestens einem der Ansprüche 1 bis 5, dadurch gekennzeichnet, daß die Auflagen (11,18) nur zum Teil von den Einfassungen (13,17) abgedeckt sind, so daß die überstehenden Auflagen (14) eine Verlängerung der metallischen Bördelschenkel (12) bilden.

FIG.1

FIG.2

FIG.3

FIG.4

FIG.5

FIG.6

0126233

1/1

Europäisches
Patentamt

**EUROPÄISCHER RECHERCHENBERICHT**

0126233

Nummer der Anmeldung

EP 84 10 2887

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | EP-A-0 028 576 (CURTY) <br> * Ansprüche 6,7; Figuren 4,5 * <br> --- | 1,3 | F 16 J 15/12 |
| A | FR-A-2 512 912 (FELT PRODUCTS) <br> --- | | |
| A | US-A-1 932 538 (SUTCLIFFE) <br> ----- | | |

**RECHERCHIERTE SACHGEBIETE (Int. Cl. ³)**

F 16 J

Der vorliegende Recherchenbericht wurde für alle Patentansprüche erstellt.

| Recherchenort <br> DEN HAAG | Abschlußdatum der Recherche <br> 07-08-1984 | Prüfer <br> LEGER M.G.M. |
|---|---|---|